# EUROPEAN PATENT SPECIFICATION

(11) **EP 1 625 954 B1**
(45) Date of publication and mention of the grant of the patent: **28.12.2011**
(21) Application number: 05076693.0
(22) Date of filing: 22.07.2005
(51) Int. Cl.: B60C 25/138

(54) **Tyre-removal machine with single multifunctional tool**
Reifendemontiervorrichtung mit einem einzigen Multifunktionswerkzeug
Machine de démontage de pneumatiques avec outil multifonctions unique

(30) Priority: 30.07.2004 IT MI20041570
(43) Date of publication of application: 15.02.2006
(73) Proprietor: Galbiati, Ennio, 20035 Lissone (Milano) (IT)
(72) Inventor: Galbiati, Ennio, 20035 Lissone (Milano) (IT)
(74) Representative: Colombo, Stefano Paolo

(56) References cited:
- EP-A- 1 177 920
- EP-A- 1 314 584
- PATENT ABSTRACTS OF JAPAN vol. 0062, no. 67 (M-182), 25 December 1982 (1982-12-25) & JP 57 158109 A (MARUYAMA SEIKI KK), 29 September 1982 (1982-09-29)

## Description

The present invention relates to a so-called tyre-removal machine for removing a tyre from its rim and for mounting a tyre on a rim. In particular, the present invention relates to a tyre-removal machine having essentially a single tool which performs several functions.

Various tyre-removal machines able to remove a tyre from a rim and mount a tyre onto a rim are already known. During the course of the present description and claims, the term "tyre-removal machine" (or also simply "tyre remover") is understood as meaning a machine able to perform the operations consisting in both removal and mounting of a vehicle tyre.

As is known, in order to remove a tyre, firstly it is required to detach the bead from the edge of the rim ("bead-detaching"). Then, one of the two beads is engaged ("bead engagement") and extracted from the edge of the rim. Finally the tyre is removed from the rim by pushing the tyre on the opposite side to the disengaged bead ("tyre removal").

EP 1.177.920 A1 discloses an automatic device for mounting and removing a tyre onto and from a relative wheel rim, comprising rotary means associated with a frame which supports an operating head, positionable in level and horizontally translatable, provided with at least one demounting tool which can rotate about an axis perpendicular to the main axis of said operating head to be positioned between a first position for seeking and gripping the bead, in which the tool is oriented towards the centre of the wheel rim, and a second position for extracting said bead from the wheel rim, in which the tool is perpendicular to the axis or is oriented in the opposite direction. Operating head movements are actuated by means of pneumatic cylinder-piston units.

This type of machine has a few drawbacks. First of all, the operating head is equipped with tools which perform only the operations of engagement and extraction of the tyre and it is therefore required to provide additional tools, not described by EP 1.177.920 A1, for detaching the tyre bead. The presence of several tools, however, results in a complexity and excessively large dimensions of the machine as well as increased manufacturing and assembly costs.

Moreover, in this automatic device the tools are partly actuated by means of a pneumatic circuit, which produces forces of a limited intensity not suitable for mounting/removal of particularly strong tyres, which require high forces.

According to the preamble of claim 1, EP 1.475.252 discloses a machine for fitting/removing tires and wheel rims for vehicles, comprising a frame for supporting elements for coupling and turning a rim, onto/from which a tire is to be fitted/removed, about a rotation axis, and a working assembly that is movably supported by the frame and comprises a working head for fitting and removing the rim/tire associated with a first translational actuation, and is provided with a tubular pusher transverse to the rotation axis, and associated with an abutment surface associable with a tire side, and with at least one tire removal tool associated with a second actuation for alternate movement between an inactive configuration at least partially within the pusher, and at least one active configuration, protruding at least partially from the pusher.

EP 1.329.342 A1 discloses a tyre changing machine comprising a lateral bead-breaking arm provided with a breaking tool and an assembly for the actuation of the arm. The assembly is such that the arm can move from a release position to a compressing position of a tyre and vice versa.

This type of machine has certain drawbacks. Firstly, the presence of several single-function tools results in a complex and costly structure. Moreover, the presence of the bead breaking arm on the side of the casing results in an excessively large volume of the machine also associated with the need to provide around the said machine a free space for use of the lateral bead-breaking arm. Moreover, removal of a tyre from a wheel requires transfer of the wheel from the side of the casing to the rotating plate situated on the casing; this operation is physically demanding and means that this type of machine is not particularly suitable for removing large-size tyres.

EP 1.314.584 A1 describes a bead releasing and removing head for a tyre fitting machine comprising a support frame anchored to the tyre fitting machine and supporting at its top a bead releasing disk and a bead removing tool, having a working tip, wherein the removing tool is slidably supported by the head and comprises driving means for displacing it, upon control, so that the working tip is movable between an advanced working position and a withdrawn rest position.

Also the bead releasing and removing head according to EP 1.314.584 A1 has certain drawbacks. Indeed, as both the bead releasing disk and the bead removing tool are both supported by the same head, the bead releasing disk dimension is relatively small, in order that it does not obstruct the passage of the bead removing tool. Thus, the bead releasing disk is not suitable for mounting/removing big size tyres or tyres having strong shoulders (the so called "run flat tyres"). The arrangement according to EP 1.314.584 A1 is rather weak as the bead releasing disk is journaled at a stud.

A first object of the present invention consists in providing a tyre-removal machine which is able to perform all the operations necessary for removing/mounting tyres using a single multifunctional tool, wherein different members of the tool do not interfere with each other, thus allowing to suitably design and tailor each member of the tool individually.

A further object of the present invention is to provide a tyre-removal machine able to perform mounting/removal of tyres of any size and rigidity.

A further object of the present invention is to provide a tyre-removal machine which is compact, versatile and easy to assemble and transport.

These and other objects are achieved, according to the present invention, by a tyre-removal machine according to Claim 1. Further advantageous features of the present invention are set forth in the dependent claims. All the claims are to be regarded as an integral part of the present invention.

According to the present invention, a tyre-removal machine for removing a vehicle tyre from a rim is provided, said tyre-removal machine comprising a frame, a column projecting from said frame in a first direction, a motor, a rotatable wheel-locking mechanism, and a tool, said tool comprising a bead-detaching member for separating said tyre from the rim and an engaging member for engaging with and extracting the tyre from the rim, said bead-detaching member also operating as a member for removing/raising the tyre, the engaging member being movable from a retracted position in which it is arranged within said bead-detaching member to a projecting position in which said engaging member is arranged so that it projects at least partially from said bead-detaching member,
the tool being connected to a pusher arm extending from the column in a second direction which is substantially perpendicular to the first direction,
the machine further comprising an hydraulic circuit in turn comprising two hydraulic pistons coupled together for moving the pusher arm in the first direction, the two hydraulic pistons being fixed each other so that their axes are mutually parallel,
the machine being characterized in that the bead-detaching member rotates when it comes into contact with a side of the tyre, thereby separating the tyre from the rim over a whole circumference of the tyre, and in that
the two hydraulic pistons are fixed each other so that plunger rods of the two pistons emerge in opposite directions.

Further characteristic features and advantages of the present invention will become clear from the following description, provided by way of a non-limiting example, to be read with reference to the accompanying figures, in which:
- Figure 1 is a schematic, partially sectioned, side view of an embodiment of a tyre-removal machine according to the present invention;
- Figure 2 is a rear view of the tyre-removal machine according to Figure 1;
- Figure 3 is a schematic, partially sectioned, side view of another embodiment of a tyre-removal machine according to the present invention;
- Figure 4 is a rear view of the tyre-removal machine according to Figure 3;
- Figures 5a, 5b and 5c are schematic, substantially longitudinally sectioned views of a multifunctional tool for the machine according to the invention, wherein the engaging member is in a retracted, intermediate and projecting position, respectively;
- Figure 6 is a front view of the multifunctional tool as shown in Figure 5c;
- Figure 7 is a front view of a multifunctional tool according to another embodiment of the present invention;
- Figure 8 illustrates schematically a step of upper bead-detaching of a tyre according to the invention;
- Figure 9 illustrates schematically a step of lower bead-detaching of a tyre according to the invention;
- Figures 10a, 10b, and 10c illustrate schematically the steps of engaging with the upper edge of a tyre according to the invention; and
- Figures 11a, 11b illustrate schematically the removal of a tyre from a rim according to the invention.

The figures are schematic illustrations which are not to scale. The same reference numbers have been used in the various figures to indicate the same components or functionally equivalent components.

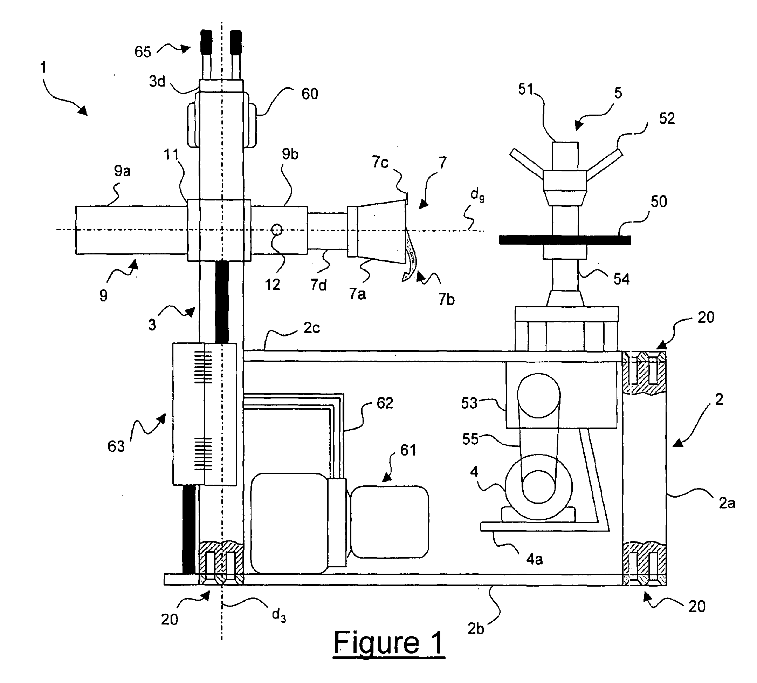

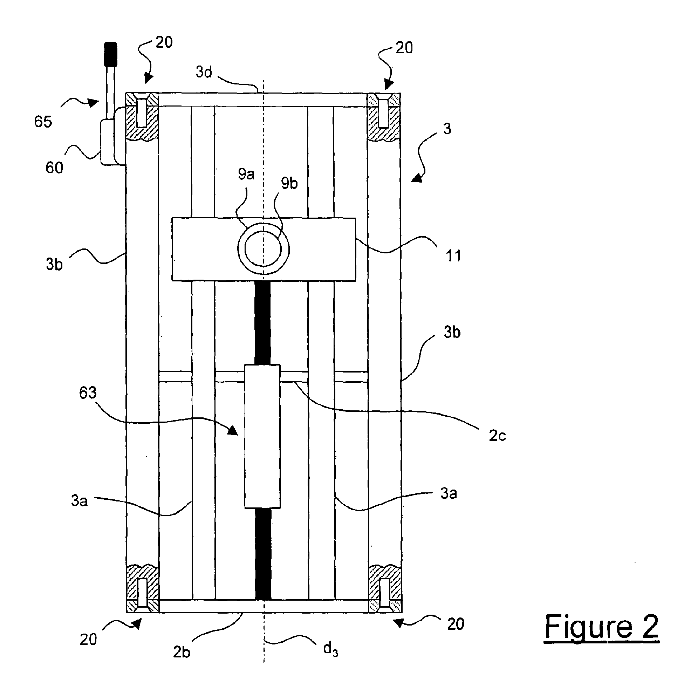

Reference will be made initially to Figures 1 and 2 which illustrate in its entirety a tyre-removal machine according to the invention. The tyre-removal machine 1 comprises a box-shaped frame 2 (or "casing") which houses an electric motor 4 supported by a bracket 4a, a perpendicular speed reducer 53 and a belt drive system 55. A shaft 54 of the perpendicular reducer 53, projecting from the casing 2, is able to cause rotation of a rotatable wheel-locking plate 5 which locks a wheel with tyre to be mounted/removed (not shown in Figures 1 and 2).

The casing 2 is substantially in the form of a parallelepiped and is preferably formed with two front uprights 2a and two rear uprights 3b. The uprights 2a and 3b preferably consist of metal profiled parts with a closed tubular cross-section. The casing 2 defines a front side, a rear side and two opposite flanks. The sides and the flanks are closed by panels. Similarly the upper surface 2c is closed by a panel. The bottom is closed by a base 2b.

Conveniently, the sides, the flanks, the upper surface and the base are fixed to the uprights 2a, 3b by means of threaded members such as screws and bolts 20. The upper closing surface 2c has an opening (not shown) which will be described below.

On the rear side of the casing, the rear uprights extend so as to form a guide column 3. The guide column 3 projects from the casing 2 with its axis directed in a first direction d₃. Typically, said first direction d₃ is substantially vertical, as shown in Figures 1 and 2. However, it is also possible to use the tyre-removal machine according to the invention in a configuration arranged on one side at 90° with respect to that shown in Figure 1. This configuration is particularly advantageous when it is required to remove/fit tyres of large-diameter wheels, thus avoiding having to raise them in order to fix them to the rotatable plate.

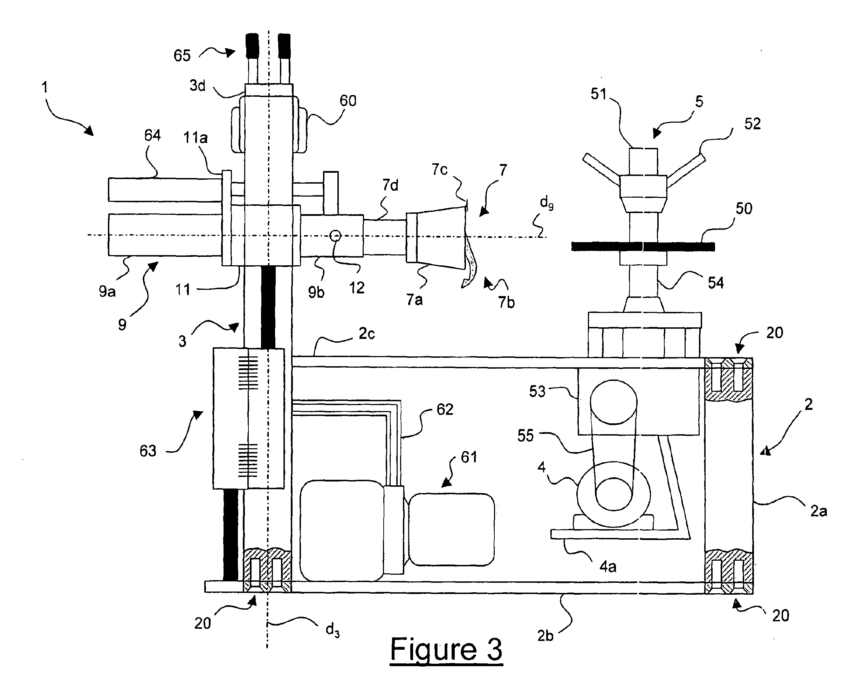

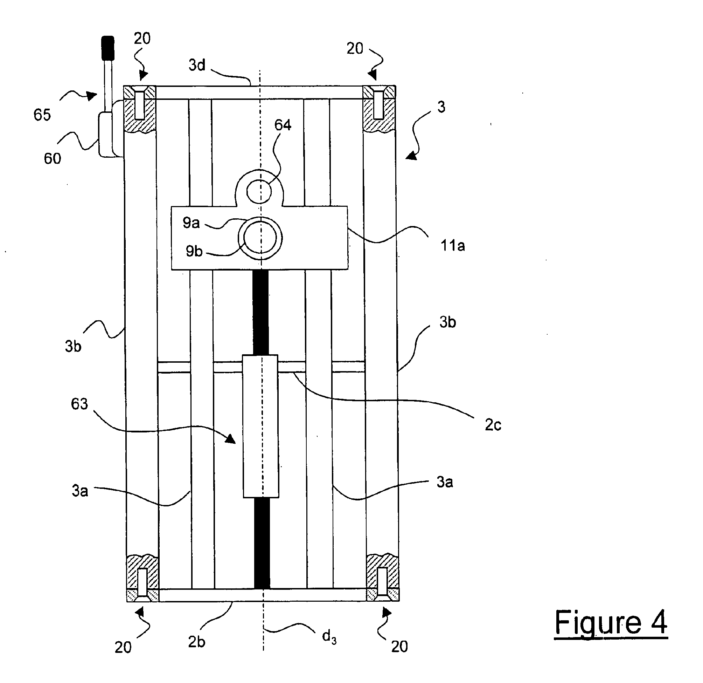

The column 3 comprises guides 3a with an axis parallel to the direction d₃. The guides 3a are preferably cylindrical and extend between the base 2b and an upper closing cross-piece 3d. According to the present invention, the uprights are mounted on the base and on the cross-piece by means of threaded members 20 (for example, screws and bolts). A tool-carrying slide 11 is slidable along the guides 3a in the direction d₃. The slide 11 supports a pusher arm 9. The pusher arm 9 has an axis directed in a second direction d₉, preferably substantially perpendicular to the first direction d₃ and therefore horizontal (at least in the most common configuration). In a first embodiment (Figures 1 and 2), the pusher arm 9 comprises a piston cylinder 9a and a plunger rod 9b which extends so as to project over the casing 2. Preferably, the rod of the plunger has a non-circular cross-section so that it may not rotate about its axis d₉. In a second embodiment (Figures 3 and 4), the pusher arm 9 has an outer piston 64 fixed to a plate 11 a of the slide 11 and to the rod 9b.

The tyre-removal machine 1 according to the invention also comprises a pressurised-fluid circuit. Conveniently, unlike the known similar tyre-removal machines, said circuit is a hydraulic circuit. This solution allows high thrusting forces to be obtained and does not require connection to a compressed-air source, but only to an electric power supply network. The hydraulic circuit of the tyre-removal machine 1 comprises an oil-dynamic control unit 60, a hydraulic distributor 61, hydraulic cylinders 63, connection pipes 62 and actuating means of the lever type 65 and pedal type (not shown).

The end of the plunger rod 9b of the pusher arm 9 also has, fixed thereto, a multifunctional tool 7 comprising a cup-shaped bead-detaching member 7a, a pawl-type bead engaging member 7b, a tyre-mounting finger 7c and a hollow cylinder 7d. Said bead-detaching member 7a and said bead engaging member 7b may perform movements which allow them to act on the tyre and performing all the necessary operations for fitting/removal of a wheel tyre. These movements will be described in detail below.

The rotatable wheel-locking plate 5 comprises a rotatable support plate 50, a threaded shaft 51 and a wheel-locking wing nut 52 which is also threaded. The shaft 51 is connected to the shaft 54 of the vertical reducer 53 and projects from the closing surface 2c of the casing.

The hollow cylinder 7d of the tool 7 is fitted into the rod 9b of the pusher arm 9 and fixed thereto by means of a pin 12 inserted into a proper fixing hole (not shown) of the hollow cylinder 7d and into corresponding fixing holes (not shown) of the rod 9b. The pin 12 is preferably spring biased.

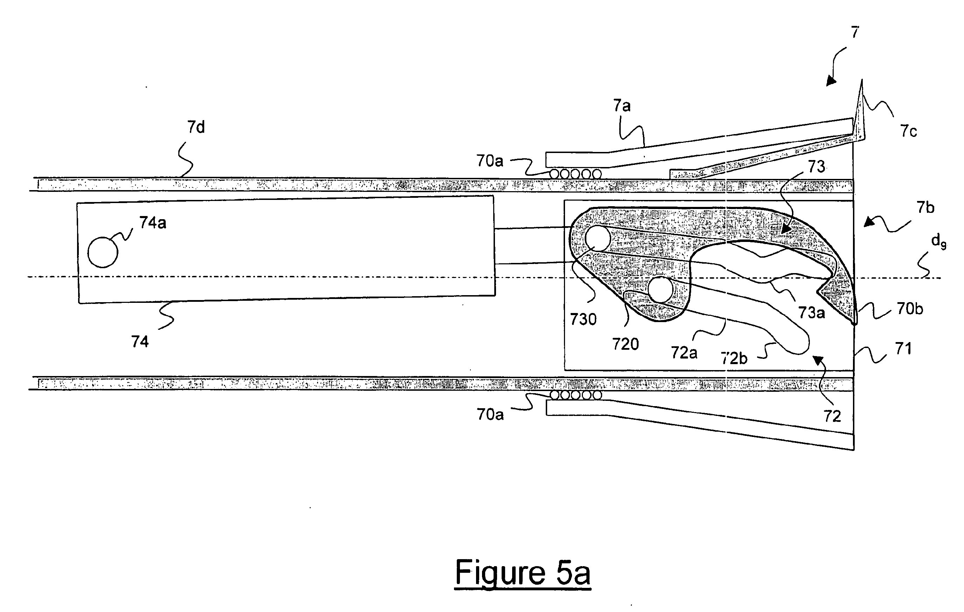

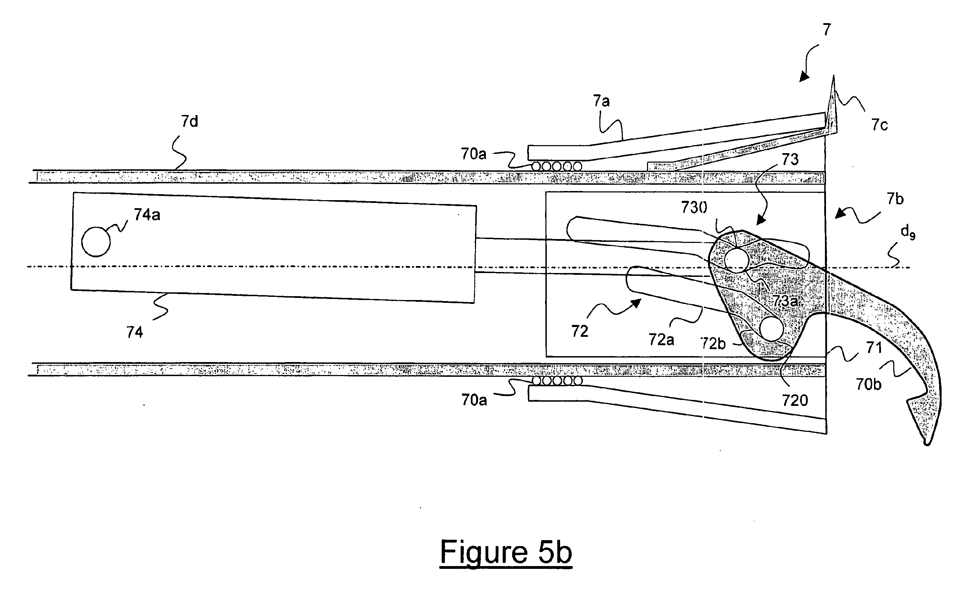

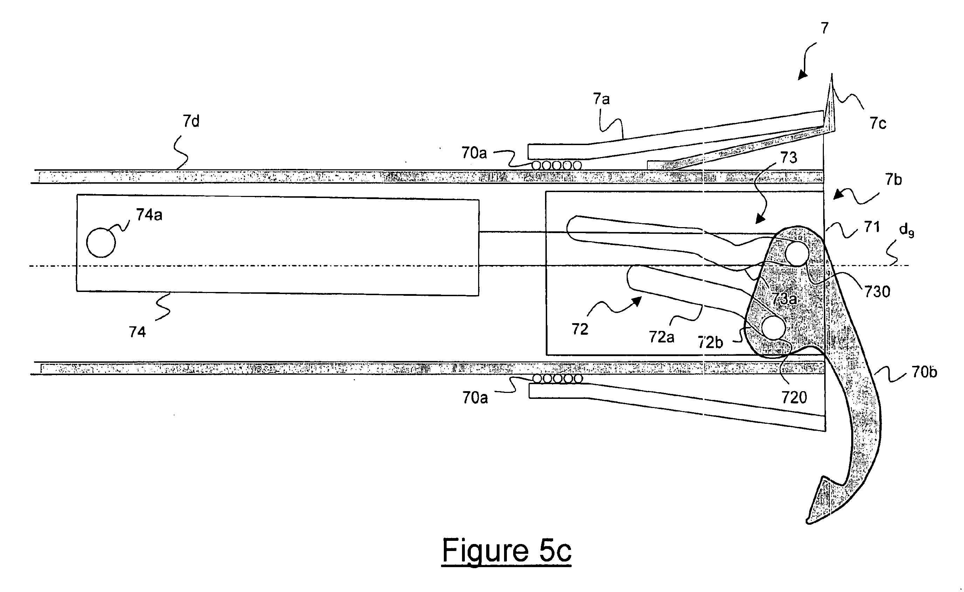

With reference now to Figures 5a, 5b, 5c, the bead-detaching member 7a is concave. Preferably, it is cup-shaped; more preferably, the bead-detaching member 7a is shaped as a frustoconical cup. In a preferred embodiment, the cup 7a is engaged on the hollow cylinder 7d by means of bearings 70a. Preferably, the frustoconical cup 7a is made of a material which produces a limited amount of friction when in contact with the rubber of the tyre. More preferably, the frustoconical cup 7a is made of graphite-injected nylon.

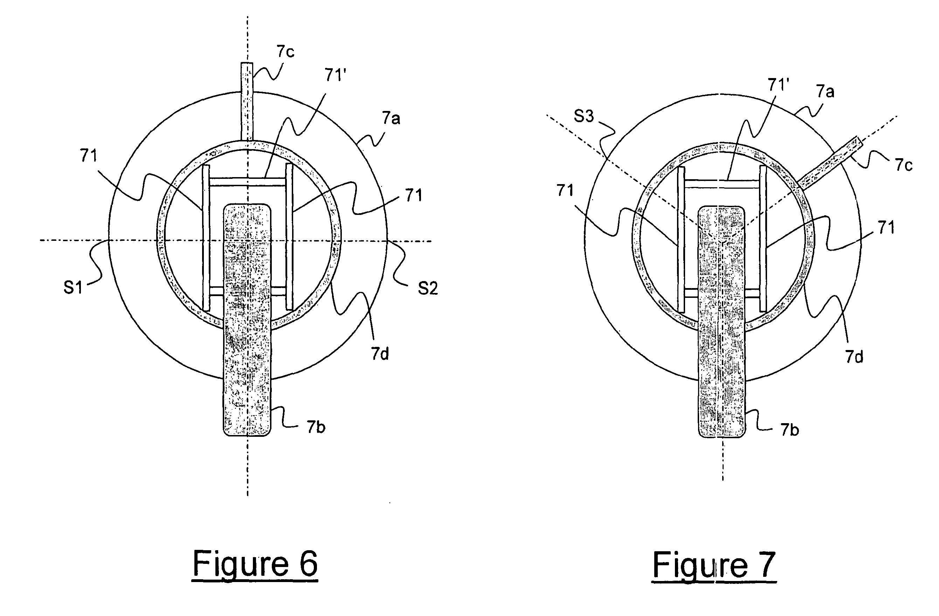

Still with reference to Figures 5a, 5b, 5c, the engaging member 7b comprises a pawl 70b which is shaped as a finger with a curved end. By referring also to Figure 6, two rectangular plates 71 engage the end of the hollow cylinder 7d. Preferably, the plates are parallel one to the other and they are preferably separated by means of spacers 71'.

Preferably, each plate 71 has a first cam 72 and a second cam 73. Preferably, the first cam 72 has a first linear portion 72a forming a first angle with the direction d₉ and a second linear portion 72b forming a second angle with the direction d₉, wherein the second angle is preferably higher than the first angle. Besides, the second cam 73 is preferably substantially linear, except a "V"-shaped kink 73a.

The pawl 70b is profitably arranged between the two plates 71. Further, the pawl 70b is provided, at each sides, with two pins 720 and 730, which are engaged with the first and the second cam, respectively of the plates. Thus, the pawl 70b is movable parallel to the plates 71, its movement being guided by the first and the second cams 72 and 73.

Furthermore, the multifunction tool 7 is provided with an hydraulic piston 74. The piston 74 is connected to the hydraulic circuit of the tyre-removal machine by means of a connection pipe (not shown). The piston 74 is rotatable around a rotation centre 74a. The rod of the piston 74 is preferably connected to the pawl 70b at the pin 730 (or at the pin 720) through a connection element (not shown), so that the piston 74 and the pawl 70b are mutually rotatable in a plane parallel to the plates 71.

Thus, according to the invention, when the piston 74 is compressed (Figure 5a), the pawl 70b is substantially completely retracted into the hollow cylinder 7d, so that the engaging member is in its retracted position, and the bead-detaching member 7a can be freely actuated.

As the piston 74 expands, it pushes the pawl 70b, whose pins 720 and 730 slide along the first and the second cam respectively. Figure 5b shows an intermediate stage wherein the pin 730 is engaging the kink 73a of the second cam 73, and the pawl 70b is partially projecting out of the hollow cylinder 7d. Figure 5c show the situation wherein the pawl 70b is completely out of the hollow cylinder 7d, so that the engaging member 70b is in its projecting position.

According to the present invention, preferably the tool 7 further comprises a tyre-mounting finger 7c. Such a tyre-mounting finger is fixed to the external surface of the hollow cylinder 7d. For instance, the tyre-mounting finger 7c may project out of the bead-detaching member 7a in an opposite direction relative to the direction of the pawl 70b when it is in its projecting position, as shown in Figure 6. In another embodiment of the invention, the tyre-mounting finger 7c may projects out of the bead-detaching member 7a in a direction which forms an angle of 120° with respect to the direction of the pawl 70b when it is in its projecting position, as shown in Figure 7. In this way, when using the bead-detaching member 7a, the portion of the bead-detaching member 7a which can be freely used for bead-detaching is wider (240° instead of 180°).

The translational movement of the tool-carrying slide 11 along the guides 3a is operated by at least one piston 63 (Figures 1-4). Preferably a pair of pistons 63 is provided. More preferably, said two pistons are fixed integrally opposite each other, namely they are fixed to each other so that their axes are mutually parallel and so that the plunger rods of the two pistons 63 emerge in opposite directions. The axis of the two pistons 63 is substantially parallel to the direction d₃. The plunger rod of the cylinder directed downwards is fixed to the base 2b and the plunger rod of the other cylinder is substantially fixed to the arm-carrying slide 11. Owing to this configuration with the pistons arranged opposite each other, a double stroke is obtained compared to the single-piston configuration, while maintaining small dimensions.

Conveniently, the slide 11 may slide downwards as far as a position where the tool 7 is below the upper surface of the casing. For this purpose, the closing surface 2c of the casing 2 has a special opening, as mentioned above.

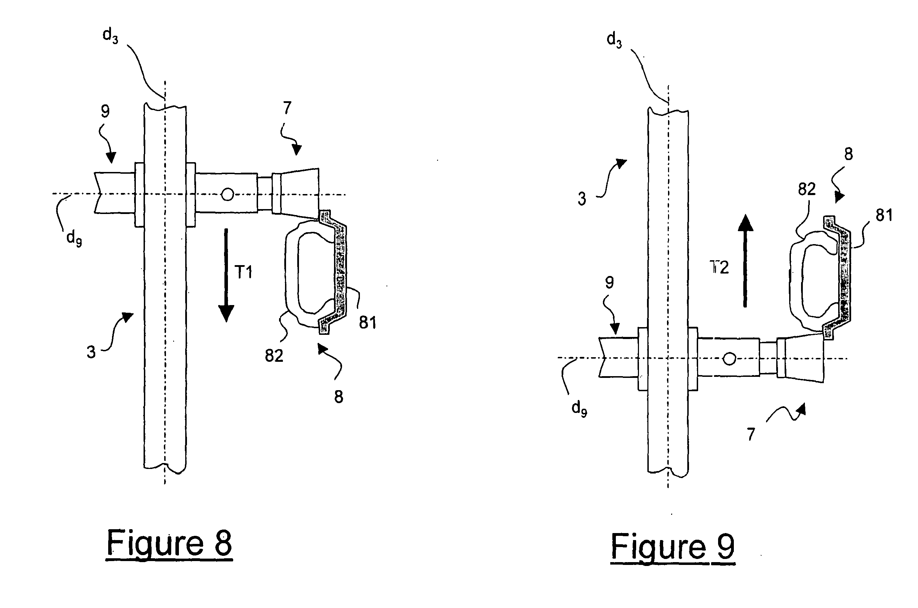

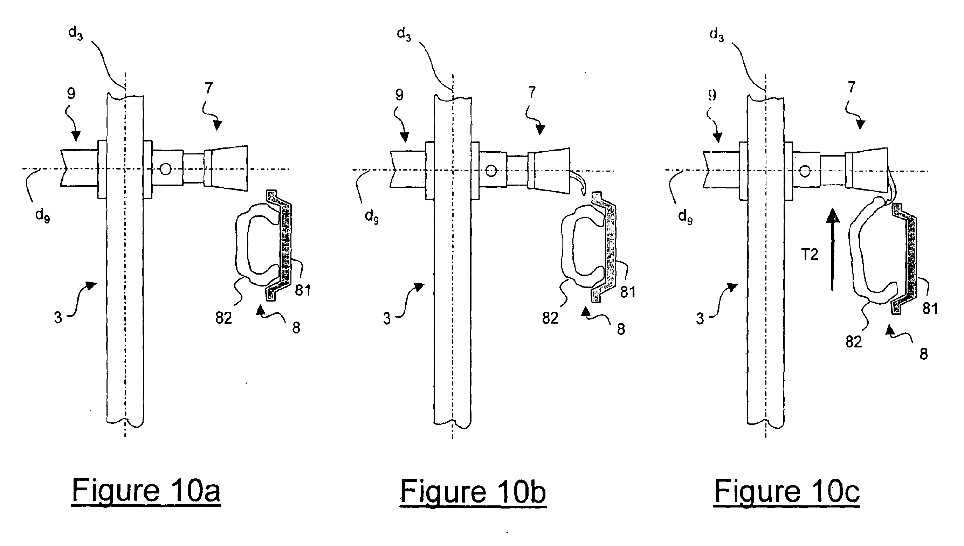

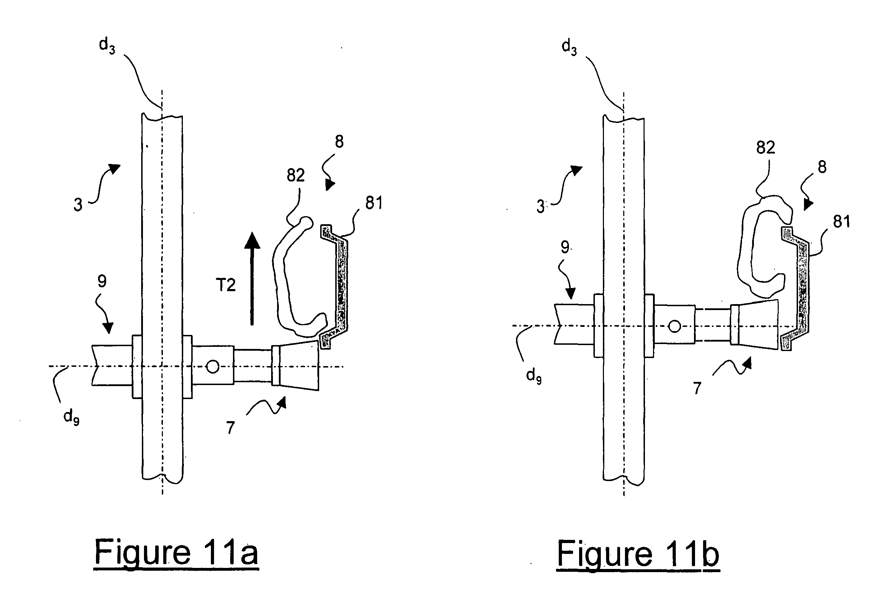

With reference to Figures 8, 9, 10 and 11, the steps for removing a tyre from the respective rim using the tyre-removal machine according to the present invention will now be described. In particular the following steps will be described:
- upper bead-detaching (shown in Figure 8);
- lower bead-detaching (shown in Figure 9);
- engagement with upper edge of the tyre (shown in Figures 10a, 10b and 10c); and
- removal/raising of the tyre (shown in Figures 11a, 11b).

First of all, the wheel 8 with the tyre to be removed is locked onto the wheel-locking plate. Below, "bottom side" of the wheel will be used to indicate the side directed towards the casing and "top side" of the wheel will be used to indicate the opposite side.

During the upper bead-detaching step (Figure 8), the engaging member 7b is in its retracted position and the pusher arm 9 with the tool 7 is displaced into the position where it is situated above the top side of the wheel. the tool 7 is rotated around the direction d₉ until either point S1 or point S2 faces the top side of the wheel (embodiment shown in Figure 6). According to the embodiment shown in Figure 7, the tool 7 is rotated around the direction d₉ until point S3 faces the top side of the wheel. The wheel-locking plate is then made to rotate (preferably by means of operation of a pedal, not shown), so that the multifunctional tool 7 acts on the whole top side of the tyre. The pusher arm 9 is then moved in the direction of the arrow T1. The bead-detaching member 7a rotates when it comes into contact with the top side of the tyre 82, as shown in Figure 8. The tool 7 is then moved away from the tyre (not shown) when the upper bead has been detached.

The lower bead-detaching step is shown in Figure 9. In order to perform this step, the tool 7 is rotated through 180° around the direction d₉ and the engaging member 7b is kept in its retracted position. The tool is displaced until it is positioned underneath the bottom side of the wheel 8. The pusher arm 9 is then raised in the direction of the arrow T2. By raising the pusher arm 9, the cup-shaped member 7a presses against the side of the (rotating) tyre and separates the bead at the bottom. The arm 9 is then moved away from the tyre (not shown).

The step of engagement with the upper edge of the tyre is shown in Figures 10a, 10b and 10c. During this step, the pusher arm 9 is displaced vertically until it is situated above the wheel. The tool 7 is rotated around the direction d₉ until the projecting direction of the engaging member is parallel to d₃ and directed towards the top side of the wheel. The engaging member 7b is initially kept in its retracted position (Figure 10a). Then, the engaging member 7b is actuated; in its intermediate position, the pawl 70b comes into contact with the upper side of the tyre (Figure 10b). Then, the pawl 70b is further pushed by the piston 74, until it reaches its projecting position, thus engaging with the bead of the tyre 82, as shown in Figure 10c. The wheel-locking plate 5 is made to rotate. The pusher arm 9 is raised (arrow T2). In this way the pawl 70b of the engaging member 7b pulls the upper bead of the tyre and extracts it from the rim 81.

Finally the tyre is removed (Figures 11 a and 11 b). The engaging member 7b is preferably retracted. The tool 7 is preferably rotated through 180° around the direction d₉. The arm 9 is then positioned underneath the wheel with the member 7a opposite to the tyre (Figure 11 a). The arm 9 is raised (arrow T2, Figure 11 a), the member 7a presses against the bottom side of the tyre 82 and raises it, thus extracting it from the rim 81.

The various steps involved in mounting a tyre onto the rim are substantially opposite to those described above.

The tyre-removal machine according to the present invention has a particularly simple structure owing to the fact that the bead-detaching, engaging and tyre-removing functions are all performed by a single multifunctional tool. The structural simplicity results in easy assembly and reduced costs.

Moreover, the two members of the multi-functional tool are arranged so that they do not interfere with each other. Thus, the bead-detaching member can be designed to be large enough to handle tyres of different size and having strong shoulders. The arrangement according to the invention is more robust than the known devices, in particular than the device according to EP 1.314.584 A1. The bead engaging member 7b, in its retracted state, is protected by the member 7a and possibly also by hollow cylinder 7d. This arrangement also protect the bead engaging member 7b from dust or the like.

Moreover, by using a hydraulic circuit for movement of the tool, it is possible to obtain, as a result of the high pressure which can be generated, forces which are greater than those of the pneumatic systems used by the known machines. It is therefore possible to handle tyres of different sizes and varying rigidity using a single tool.

A further advantage of the present invention consists in an increase in the ease of manufacture of the casing. According to the present invention, in fact, the casing is formed by assembling, using threaded members, a set of uprights and panels, an operation which is more versatile than the traditional manufacturing method using folded and shaped metal sheets. In addition, this casing structure allows a reduction in the storage and transportation costs, since the casing may be stored and transported in unassembled form, with a considerable reduction in the occupied space.

## Claims

1. A tyre-removal machine (1) for removing a tyre (82) from a rim (81), said tyre-removal machine comprising a frame (2), a column (3) projecting from said frame (2) in a first direction (d₃), a motor (4), a rotatable wheel-locking mechanism (5), and a tool (7), said tool (7) comprising a bead-detaching member (7a) for separating said tyre (82) from the rim (81) and an engaging member (7b) for engaging with and extracting the tyre from the rim (81), said bead-detaching member (7a) also operating as a member for removing/raising the tyre, the engaging member (7b) being movable from a retracted position in which it is arranged substantially within said bead-detaching member (7a) to a projecting position in which said engaging member (7b) is arranged so that it projects at least partially from said bead-detaching member (7a),
said tool (7) being connected to a pusher arm (9) extending from said column (3) in a second direction (dg) which is substantially perpendicular to said first direction (d₃),
said tyre-removal machine (1) further comprising an hydraulic circuit in turn comprising two hydraulic pistons (63) coupled together for moving said pusher arm (9) in said first direction (d₃), said two hydraulic pistons (63) being fixed each other so that their axes are mutually parallel,
said tyre removal machine (1) being **characterized in that** said bead-detaching member (7a) rotates when it comes into contact with a side of said tyre (82), thereby separating said tyre (82) from said rim (81) over a whole circumference of said tyre (82), and **in that**
said two hydraulic pistons (63) are fixed each other so that plunger rods of the two pistons emerge in opposite directions.

2. The tyre-removal machine (1) according to claim 1, **characterized in that** said bead-detaching member (7a) comprises a cup-shaped member, said cup-shaped member being rotatable idly around said second direction (d₉).

3. The tyre-removal machine (1) according to claim 1 or 2, **characterized in that** said engaging member (7b) is shaped as a pawl (70b) which comprises an elongated finger having a curved end.

4. The tyre-removal machine (1) according to any of preceding claims, **characterized in that** said engaging member (7b) further comprises at least one cam (72, 73) for guiding said engaging member (7b) from said retracted position to said projecting position and vice versa.

5. The tyre-removal machine (1) according to any of preceding claims, wherein said engaging member (7b) is rotatable about said second direction (d₉) from a first angular position to a second angular position.

6. The tyre-removal machine (1) according to any one of the preceding claims, **characterized in that** said pusher arm (9) is movable in said first direction (d₃) and in said second direction (d₉).

7. The tyre-removal machine (1) according to claim 1, **characterized in that** said hydraulic circuit comprises an hydraulic piston (74) for moving said engaging member (7b) from said retracted position to said projecting position.

8. The tyre-removal machine according to claim 1 or 7, **characterized in that** said hydraulic circuit comprises an hydraulic piston (64) for moving said pusher arm (9) along said second direction (d₉).

## Patentansprüche

1. Reifenentfernungsmaschine (1) zum Entfernen eines Reifens (82) von einer Felge (81), wobei die Reifenentfernungsmaschine einen Rahmen (2), eine Säule (3), die von dem Rahmen (2) in einer ersten Richtung (d₃) herausragt, einen Motor (4), einen drehbaren Radblockiermechanismus (5) und ein Arbeitsgerät (7) aufweist, wobei das Arbeitsgerät (7) ein Reifenwulst-Löseelement (7a) zum Trennen des Reifens (82) von der Felge (81) und ein Eingriffselement (7b) zum Eingreifen und Abziehen des Reifens von der Felge (81) aufweist, wobei das Reifenwulst-Löseelement (7a) auch als Element zum Entfernen/Anheben des Reifens operiert, wobei das Eingriffselement (7b) von einer zurückgezogenen Position, in welcher es im Wesentlichen innerhalb des Reifenwulst-Löseelements (7a) angeordnet ist, in eine herausragende Position bewegbar ist, in welcher das Eingriffselement (7b) so angeordnet ist, dass es zumindest teilweise aus der Reifenwulst-Löseelement (7a) herausragt,
wobei das Arbeitsgerät (7) mit einem Schieberarm (9) verbunden ist, der sich von der Säule (3) in eine zweite Richtung (d₉), welche im Wesentlichen senkrecht zur ersten Richtung (d₃) ist, erstreckt,
wobei die Reifenentfernungsmaschine (1) weiterhin eine hydraulische Schaltung aufweist, die wiederum zwei hydraulische Kolbeneinheiten (63), die miteinander zum Bewegen des Schieberarms (9) in eine erste Richtung (d₃) gekoppelt sind, aufweist, wobei die zwei hydraulischen Kolbeneinheiten (63) so aneinander befestigt sind, dass ihre Achsen parallel zueinander sind,
wobei die Reifenentfernungsmaschine (1)
**dadurch gekennzeichnet ist,**
**dass** das Reifenwulst-Löseelement (7a) rotiert, wenn es in Berührung mit einer Seite des Reifens (82) kommt, wobei es **dadurch** den Reifen (82) von der Felge (81) über einen gesamten Umfang des Reifens (82) trennt, und
**dass** die zwei hydraulischen Kolbeneinheiten (63) so aneinander befestigt sind, dass die Kolbenstangen der zwei Kolbeneinheiten in entgegen gesetzten Richtungen hervortreten.

2. Reifenentfernungsmaschine (1) nach Anspruch 1,
**dadurch gekennzeichnet,**
**dass** das Reifenwulst-Löseelement (7a) ein topfförmiges Bauteil aufweist, wobei das topfförmige Bauteil im Leerlauf drehbar um die zweite Richtung (d₉) ist.

3. Reifenentfernungsmaschine (1) nach Anspruch 1 oder 2,
**dadurch gekennzeichnet ,**
**dass** das Eingriffselement (7b) als eine Klinke (70b) ausgebildet ist, die einen länglichen Finger mit einem gekrümmten Ende aufweist.

4. Reifenentfernungsmaschine (1) nach einem der vorhergehenden Ansprüche,
**dadurch gekennzeichnet ,**
**dass** das Eingriffselement (7b) ferner mindestens eine Nocke (72, 73) zum Führen des Eingriffselements (7b) von der zurückgezogenen Position zu einer vorstehenden Position und umgekehrt aufweist.

5. Reifenentfernungsmaschine (1) nach einem der vorhergehenden Ansprüche, wobei das Eingriffselement (7b) um die zweite Richtung (d₉) von einer ersten Winkelposition zu einer zweiten Winkelposition drehbar ist.

6. Reifenentfernungsmaschine (1) nach einem der vorhergehenden Ansprüche,
**dadurch gekennzeichnet,**
**dass** der Schieberarm (9) in der ersten Richtung (d₃) und in der zweiten Richtung (d₉) verschiebbar ist.

7. Reifenentfernungsmaschine (1) nach Anspruch 1,
**dadurch gekennzeichnet,**
**dass** die hydraulische Schaltung eine hydraulische Kolbeneinheit (74) zum Bewegen des Eingriffselementes (7b) von einer zurückgezogenen Position zu einer herausstehenden Position aufweist.

8. Reifenentfernungsmaschine (1) nach Anspruch 1 oder 7,
**dadurch gekennzeichnet,**
**dass** die hydraulische Schaltung eine hydraulische Kolbeneinheit (64) zum Bewegen des Schieberarms (9) entlang der zweiten Richtung (d₉) aufweist.

## Revendications

1. Machine de démontage de pneu (1) pour démonter un pneu (82) d'une jante (81), ladite machine de démontage de pneu comprenant un châssis (2), une colonne (3) faisant saillie dudit châssis (2) dans une première direction (d₃), un moteur (4), un mécanisme de blocage de roue rotatif (5) et un outil (7), ledit outil (7) comprenant un élément de détachement de talon (7a) pour séparer ledit pneu (82) de la jante (81) et un élément de mise en prise (7b) pour se mettre en prise avec et extraire le pneu de la jante (81), ledit élément de détachement de talon (7a) servant également d'élément pour démonter/monter le pneu, l'élément de mise en prise (7b) étant mobile d'une position rétractée dans laquelle il est agencé sensiblement à l'intérieur dudit élément de détachement de talon (7a) jusqu'à une position en saillie dans laquelle ledit élément de mise en prise (7b) est agencé de sorte qu'il fait saillie au moins partiellement dudit élément de détachement de talon (7a) ,
ledit outil (7) étant raccordé à un bras pousseur (9) s'étendant à partir de ladite colonne (3) dans une deuxième direction (d₉) qui est sensiblement perpendiculaire à ladite première direction (d₃),
ladite machine de démontage de pneu (1) comprenant en outre un circuit hydraulique, comprenant à son tour deux pistons hydrauliques (63) couplés ensemble pour déplacer ledit bras pousseur (9) dans ladite première direction (d₃), lesdits deux pistons hydrauliques (63) étant fixés entre eux de sorte que leurs axes sont mutuellement parallèles,
ladite machine de démontage de pneu (1) étant **caractérisée en ce que** ledit élément de détachement de talon (7a) tourne lorsqu'il vient en contact avec un côté dudit pneu (82), séparant ainsi ledit pneu (82) de ladite jante (81) sur la circonférence totale dudit pneu (82), et **en ce que** :
lesdits deux pistons hydrauliques (63) sont fixés entre eux de sorte que des tiges de piston plongeur des deux pistons sortent dans des directions opposées.

2. Machine de démontage de pneu (1) selon la revendication 1, **caractérisée en ce que** ledit élément de détachement de talon (7a) comprend un élément en forme de coupelle, ledit élément en forme de coupelle pouvant tourner au ralenti autour de ladite deuxième direction (d₉).

3. Machine de démontage de pneu (1) selon la revendication 1 ou 2, **caractérisée en ce que** ledit élément de mise en prise (7b) est formé comme un cliquet (70b) qui comprend un doigt allongé ayant une extrémité incurvée.

4. Machine de démontage de pneu (1) selon l'une quelconque des revendications précédentes, **caractérisée en ce que** ledit élément de mise en prise (7b) comprend en outre au moins une came (72, 73) pour guider ledit élément de mise en prise (7b) de ladite position rétractée à ladite position en saillie et vice versa.

5. Machine de démontage de pneu (1) selon l'une quelconque des revendications précédentes, dans laquelle ledit élément de mise en prise (7b) peut tourner autour de ladite deuxième direction (d₉) d'une première position angulaire à une deuxième position angulaire.

6. Machine de démontage de pneu (1) selon l'une quelconque des revendications précédentes, **caractérisée en ce que** ledit bras pousseur (9) est mobile dans ladite première direction (d₃) et dans ladite deuxième direction (d₉).

7. Machine de démontage de pneu (1) selon la revendication 1, **caractérisée en ce que** ledit circuit hydraulique comprend un piston hydraulique (74) pour déplacer ledit élément de mise en prise (7b) de ladite position rétractée à ladite position en saillie.

8. Machine de démontage de pneu (1) selon la revendication 1 ou 7, **caractérisée en ce que** ledit circuit hydraulique comprend un piston hydraulique (64) pour déplacer ledit bras pousseur (9) le long de ladite deuxième direction (d₉).
